# EUROPÄISCHE PATENTSCHRIFT

(11) **EP 1 646 919 B1**
(45) Veröffentlichungstag und Bekanntmachung des Hinweises auf die Patenterteilung: **26.05.2010**
(21) Anmeldenummer: 04740599.8
(22) Anmeldetag: 02.07.2004
(51) Int. Cl.: G05B 19/418

(54) **KOPPLUNGSVORRICHTUNG FÜR DREI BUSSYSTEME**
COUPLING DEVICE FOR THREE BUS SYSTEMS
SYSTEME DE COUPLAGE DESTINE A TROIS SYSTEMES DE BUS

(30) Priorität: 22.07.2003 EP 03016734
(43) Veröffentlichungstag der Anmeldung: 19.04.2006
(73) Patentinhaber: SIEMENS AKTIENGESELLSCHAFT, 80333 München (DE)
(72) Erfinder: GEHLEN, Patrick, 91077 Grossenbuch (DE); KRÄMER, Werner, 92421 Schwandorf (DE); WIESGICKL, Bernhard, 92249 Vilseck (DE); WUNSCHIK, Roman, 90513 Zirndorf (DE)
(86) Internationale Anmeldenummer: PCT/EP2004/007251
(87) Internationale Veröffentlichungsnummer: WO 2005/019952

(56) Entgegenhaltungen:
- DE-A- 10 049 049
- PFEIFER T ET AL: "FLEXIBLE INTEGRATION OF VARIOUS FIELDBUS AND SENSOR/ACTUATOR BUS SYSTEMS INTO MACHINE TOOL CONTROL" MICROSYSTEM TECHNOLOGIES, BERLIN, DE, Bd. 3, Nr. 4, August 1997 (1997-08), Seiten 191-198, XP009021376 ISSN: 0946-7076

## Beschreibung

Die vorliegende Erfindung betrifft eine Kopplungsvorrichtung für Datenbusse mit einer ersten Anschlusseinrichtung für einen ersten Datenbus, einer zweiten Anschlusseinrichtung für einen zweiten, von dem ersten verschiedenen Datenbus und einer Datenverarbeitungseinrichtung, die mit der ersten und zweiten Anschlusseinrichtung verbunden ist, um einen Datenaustausch zwischen den Datenbussen zu ermöglichen.

Eine Kopplungsvorrichtung für drei Bussysteme ist aus DE-17-10049049 bekannt.

Bei zahlreichen Anwendungen besteht der Bedarf, verschiedene Bussysteme zu koppeln. Bei der Datenübertragung zwischen den Bussystemen soll dabei häufig zwischen Standarddaten und sicherheitsrelevanten Daten unterschieden werden.

Zur Kopplung verschiedener Bussysteme werden bekanntermaßen sogenannte Links verwendet. Diese Links sind jedoch nicht konfigurierbar. Ferner sind zur Eingabe beziehungsweise Ausgabe von Daten unmittelbar an einem Link Eingabe/Ausgabe-Baugruppen (I/os) an eines der beiden Bussysteme anzuschließen. Dies verursacht zusätzliche Kosten, reduziert die Reaktionszeiten und belastet die Rechenleistung der speicherprogrammierbaren Steuerungen (SPS). Diese Nachteile wirken sich besonders auf Baugruppen für sicherheitsrelevante Daten aus, da dort entsprechend hohe Reaktionszeiten gefordert sind.

Die Aufgabe der vorliegenden Erfindung besteht somit darin, eine Kopplungsvorrichtung für Bussysteme vorzuschlagen, bei der die Ein- und Ausgabe von Daten in unmittelbarer Nähe der Vorrichtung möglich ist, ohne die Reaktionszeiten des Systems wesentlich zu reduzieren beziehungsweise das System wesentlich zu belasten.

Erfindungsgemäß wird diese Aufgabe gelöst durch eine Kopplungsvorrichtung für Datenbusse mit einer ersten Anschlusseinrichtung für einen ersten Datenbus, einer zweiten Anschlusseinrichtung für einen zweiten, vom ersten verschiedenen Datenbus und einer Datenverarbeitungseinrichtung, die mit der ersten und zweiten Anschlusseinrichtung verbunden ist, um einen Datenaustausch zwischen den Datenbussen zu ermöglichen, sowie einer dritten Anschlusseinrichtung, die ebenfalls mit der Datenverarbeitungseinrichtung verbunden ist, für einen dritten, von dem ersten und zweiten verschiednen Datenbus, so dass ein Datenaustausch zwischen den drei Datenbussen möglich ist.

Erfindungsgemäß ist es damit möglich, dass ein zentraler Baustein auf Daten von drei oder mehr Bussystemen zugreift.

Vorteilhafterweise ist die erfindungsgemäße Kopplungsvorrichtung konfigurierbar. Insbesondere kann damit eine Konfiguration ermöglicht werden, mit der eine Unterscheidung der Daten durchführbar ist, welche zwischen den Bussystemen übertragen werden sollen. Insbesondere kann die Kopplungsvorrichtung derart konfiguriert werden, dass der Datentransfer zwischen zweien oder dreien der Datenbusse in Abhängigkeit von der Semantik der zu übertragenden Daten steuerbar ist. So ist es beispielsweise möglich, die Übertragung von Standarddaten anders zu gestalten als die Übertragung von sicherheitsrelevanten Daten.

Der erste Datenbus, an den die Kopplungsvorrichtung angeschlossen wird, kann ein sogenannter Profibus sein. Der zweite Datenbus kann beispielsweise ein AS-i-Bus sein.

Der dritte Datenbus, an den die erfindungsgemäße Kopplungsvorrichtung anschließbar ist, kann ein Peripheriebus sein, an den Eingabe/Ausgabe-Module angeschlossen werden können. Mittels dieser Module können Daten am Link ein- und ausgegeben werden. Die Eingabe/Ausgabe-Module können durch den Link bzw. die Kopplungsvorrichtung mit den anderen Datenbussen verknüpft werden. Der dritte Datenbus kann aber dazu verwendet werden, um mehrere Kopplungsvorrichtungen miteinander zu verbinden.

In die Kopplungsvorrichtung kann ein Monitor zur Überwachung der Konfigurationseinstellungen beziehungsweise des Datentransfers integriert sein. Insbesondere sollen durch den Monitor sicherheitsrelevante Daten erkannt und weiterverarbeitet werden.

Die vorliegende Erfindung wird nun anhand der beigefügten Zeichnungen näher erläutert, in denen zeigen:
- FIG 1: ein Prinzipschaltbild einer erfindungsgemäßen Kopp- lungsvorrichtung;
- FIG 2: ein Datenflussdiagramm einer erfindungsgemäßen Kopp- lungsvorrichtung;
- FIG 3: ein Datenflussdiagramm einer Kopplung mehrerer Feld- bussysteme;
- FIG 4: ein Datenflussdiagramm eines Kopplers mit Einga- be/Ausgabe-Baugruppen;
- FIG 5: ein Datenflussdiagramm eines Kopplers von zwei Feld- bussystemen ohne weitere Beschaltung; und
- FIG 6: ein Konfigurationsbeispiel gemäß dem Datenflussdia- gramm von FIG 4.

Die nachfolgend näher beschriebenen Ausführungsbeispiele stellen bevorzugte Ausführungsformen der vorliegenden Erfindung dar.

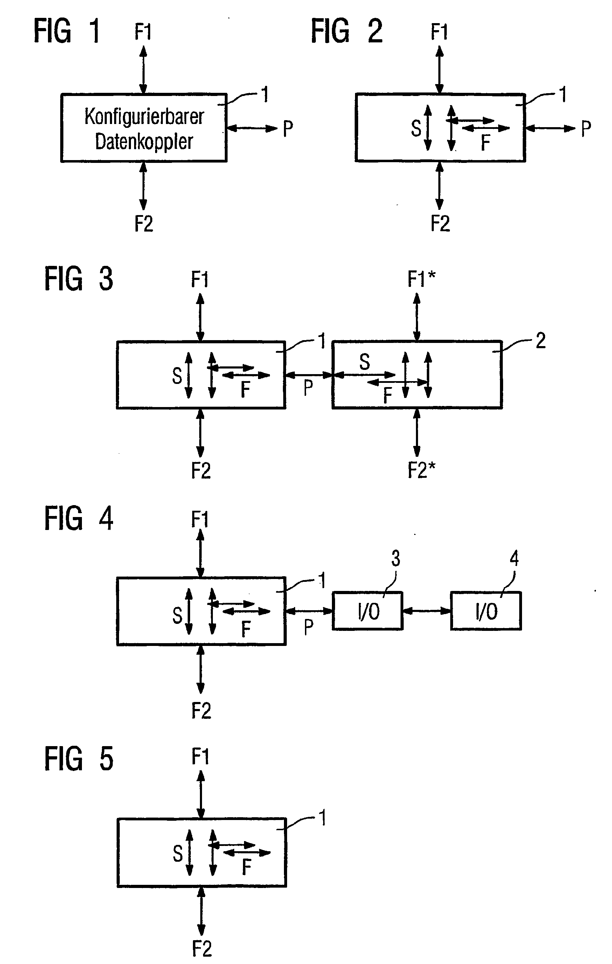

Gemäß FIG 1 kann die erfindungsgemäße Kopplungsvorrichtung beziehungsweise der erfindungsgemäße Datenkoppler 1 zwischen zwei Feldbusse F1 und F2 geschaltet werden. Des Weiteren besitzt der Datenkoppler 1 einen Anschluss an einen internen Peripheriebus P. Über den internen Peripheriebus P ist der Datenkoppler 1 hinsichtlich des Datentransfers zwischen den Feldbussen F1 und F2 sowie des Datentransfers zwischen dem Peripheriebus und den Feldbussen konfigurierbar.

In FIG 2 ist der Datenfluss wiedergegeben, der zwischen den drei Bussen F1, F2 und P möglich ist. Neben Standarddaten S können auch sicherheitsrelevante Daten F unter den Datenbussen ausgetauscht werden. In diesem Fall können die sicherheitsrelevanten Daten und/oder Standarddaten der Busse F1 und F2 über eine Ausgabeeinheit am Peripheriebus ausgegeben werden und/oder sicherheitsrelevante Daten und/oder Standarddaten über eine Eingabeeinheit vom Peripheriebus eingelesen werden und an die Busse F1 und/oder F2 weitergeleitet werden.

In FIG 3 ist die Kopplung zweier Feldbussysteme F1 F2 und F1*, F2* über den Peripheriebus P dargestellt. Hierzu sind ein erster Datenkoppler 1 und ein zweiter Datenkoppler 2 über ihre Peripheriebusschnittstelle miteinander verbunden. Demzufolge können sämtliche vier Feldbusse F1, F2, F1* und F2* Standarddaten S und sicherheitsrelevante Daten F miteinander austauschen. Auch hier sind die beiden Datenkoppler 1 und 2 hinsichtlich des Datentransfers von Standarddaten und sicherheitsrelevanten Daten beliebig konfigurierbar.

In FIG 4 ist das Datenflussdiagramm einer besonders bevorzugten Konfiguration wiedergegeben. Der Datenkoppler 1 ist über den Peripheriebus P mit mehreren Eingabe/Ausgabe-Baugruppen 3, 4 verbunden. Über diese Baugruppen 3, 4 können Informationen aus den anderen Bussen ausgegeben oder in diese eingegeben werden. Eine entsprechende Konfiguration ermöglicht nicht nur die oben genannte Festlegung der Daten, die zwischen den angeschlossenen Datenbussen übertragen werden, sondern erlaubt auch eine individuelle Vor-Ort-Verarbeitung der Daten. Bei entsprechender Ausgestaltung der Hard- und Software können auch sicherheitsrelevante Daten übertragen beziehungsweise verarbeitet werden.

Durch den direkten Anschluss der Eingabe/Ausgabe-Baugruppen 3, 4 über den Peripheriebus P an den Datenkoppler 1 kann auf den Anschluss solcher Baugruppen an die Feldbusse F1 und F2 in der Nähe des Datenkopplers 1 verzichtet werden. Damit kann beispielsweise die SPS eines Profibusses entlastet werden.

FIG 5 zeigt das Datenflussdiagramm eines reinen Kopplers, mit dem die Feldbusse F1 und F2 gekoppelt sind. Der Datentransfer zwischen beiden Bussen ist wie bei den vorhergehenden Ausführungsbeispielen über den konfigurierbaren Datenkoppler 1 einstellbar. Weitere Eingabe/Ausgabe-Baugruppen sind hier nicht vorgesehen.

Wie die obigen Ausführungsbeispiele zeigen, kann die Kopplung mehrerer Bussysteme erfindungsgemäß sehr flexibel gestaltet werden. Des Weiteren können die Systemkosten reduziert werden, da der Verdrahtungsaufwand reduziert wird.

Darüber hinaus werden die Reaktionszeiten bei dem erfindungsgemäßen System verkürzt, da keine Eingabe/Ausgabe-Baugruppen zwischen dem Datenkoppler und dem SPS eines Profibusses angeordnet sind. Ferner ist die SPS entlastet, wenn keine zusätzlichen I/Os in dem Profibus angeordnet sind. Außerdem kann mit dem konfigurierbaren Datenkoppler eine Vielzahl unterschiedlicher Gerätevarianten mit wenig Aufwand aufgebaut werden. Beispiele hierfür sind, wie teilweise bereits erwähnt, ein einfacher Koppler, ein Koppler für sicherheitsrelevante Daten und konfigurierbare I/Os für sicherheitsrelevante Daten.

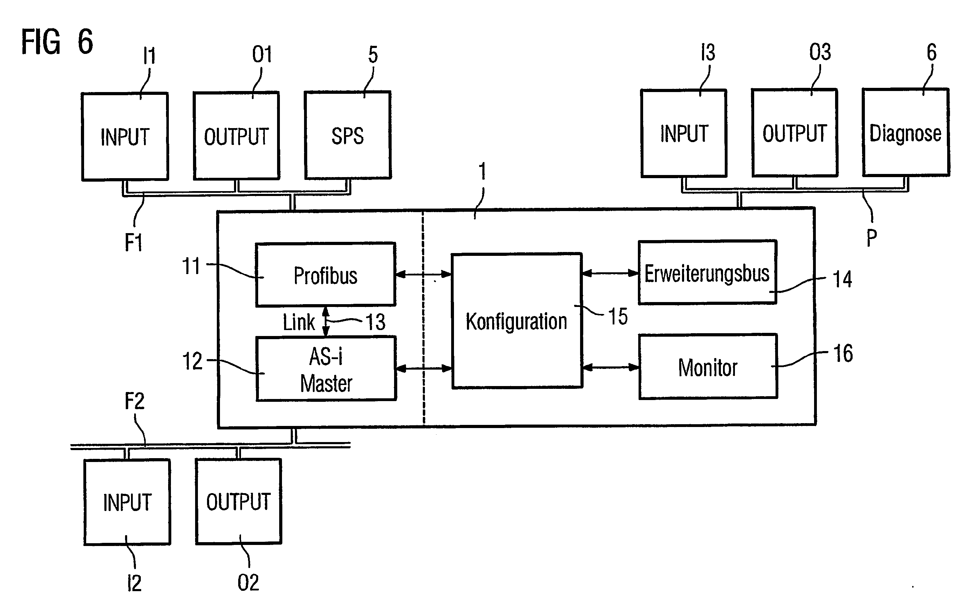

FIG 6 gibt ein konkretes Ausführungsbeispiel mehrerer Datenbusse, die mit der erfindungsgemäßen Kopplungsvorrichtung verbunden sind, wieder. Der Datenkoppler 1 besitzt eine Profibus-Schnittstelle 11 zu einem Profibus als Feldbus F1 und einen AS-i-Master 12 als Schnittstelle zu einem AS-i-Bus als Feldbus F2. Die Profibus-Schnittstelle 11 und der AS-i-Master 12 sind über ein Link 13 miteinander verbunden. Eine Erweiterungs- beziehungsweise Peripheriebusschnittstelle 14 dient zum Anschluss des Datenkopplers 1 an den Peripheriebus P. Sämtliche Schnittstellen 11, 12 und 14 sind über eine interne Konfigurationseinheit 15 konfigurierbar. Der Datenkoppler 1 verfügt außerdem über einen Monitor 16, mit dem die Konfiguration beziehungsweise der Datentransfer überwachbar ist.

An den Profibus F1 sind in bekannter Weise ein Eingabebaustein I1 und ein Ausgabebaustein O1 sowie eine SPS 5 angeschlossen. In ähnlicher Weise ist an den AS-i-Bus F2 ein Eingabebaustein I2 und ein Ausgabebaustein 02 angeschlossen. Ferner sind ein Eingabebaustein I3 und ein Ausgabebaustein 03 sowie eine Diagnoseeinheit 6 an den Peripheriebus P angeschlossen. Die am Peripheriebus P befindlichen Komponenten sind über den Datenkoppler 1 konfigurierbar.

Mit der erfindungsgemäßen Kopplungsvorrichtung können somit neben einem Profibus/AS-I-Bus-Link mit interner Kommunikationsschnittstelle auch ein reiner AS-i-Sicherheitsmonitor mit interner Kommunikationsschnittstelle zum Anschluss weiterer I/O-Module mit beliebig vielen Ausgängen realisiert werden. Darüber hinaus sind - wie teilweise bereits vorgestellt - mit der erfindungsgemäßen Kopplungsvorrichtung AS-i-Sicherheitsmonitore mit interner Kommunikationsschnittstelle zum Anschluss weiterer I/O-Module sowie mit Profibusanschluss als Konfigurationsschnittstelle und Diagnoseeinheit oder mit ASi-Anschluss oder mit Profibus/Profisafe- und AS-i-Anschluss realisierbar. Der sogenannte Profisafe ermöglicht auch die Übertragung sicherheitsrelevanter Daten. Schließlich können mit den erfindungsgemäßen Kopplungsvorrichtungen, die jeweils mindestens drei Busanschlüsse aufweisen, Datennetze mit beliebiger Anzahl an Bussystemen realisiert werden.

## Patentansprüche

1. Kopplungsvorrichtung für Datenbusse mit
- einer ersten Anschlusseinrichtung (11) für einen ersten Datenbus (F1),
- einer zweiten Anschlusseinrichtung (12) für einen zweiten, vom ersten verschiedenen Datenbus (F2) und
- einer Datenverarbeitungseinrichtung (13, 15), die mit der ersten und zweiten Anschlusseinrichtung (11, 12) verbunden ist, um einen Datenaustausch zwischen den Datenbussen (F1, F2) zu ermöglichen,
**gekennzeichnet durch**
- eine dritte Anschlusseinrichtung (14), die ebenfalls mit der Datenverarbeitungseinrichtung (13, 15) verbunden ist, für einen dritten, von dem ersten und zweiten verschiedenen Datenbus (P), so dass ein Datenaustausch zwischen den drei Datenbussen (F1, F2, P) möglich ist.

2. Kopplungsvorrichtung nach Anspruch 1, die konfigurierbar ist.

3. Kopplungsvorrichtung nach Anspruch 2, die derart konfigurierbar ist, dass der Datentransfer zwischen zweien oder dreien der Datenbusse (F1, F2, P) in Abhängigkeit von der Semantik der zu übertragenden Daten steuerbar ist.

4. Kopplungsvorrichtung nach einem der vorhergehenden Ansprüche, wobei der erste Datenbus (F1) ein Profibus ist.

5. Kopplungsvorrichtung nach einem der vorhergehenden Ansprüche, wobei der zweite Datenbus (F2) ein AS-i-Bus ist.

6. Kopplungsvorrichtung nach einem der vorhergehenden Ansprüche, wobei an den dritten Datenbus (P) Eingabe/Ausgabe-Module (I3, 03) anschließbar sind, die mit Hilfe der Kopplungsvorrichtung (1) mit dem ersten und/oder zweiten Datenbus verknüpfbar sind.

7. Kopplungsvorrichtung nach einem der vorhergehenden Ansprüche, die einen Monitor (16) mit Konfigurationsmöglichkeit aufweist.

## Claims

1. Coupling apparatus for data buses having
- a first connecting device (11) for a first data bus (F1),
- a second connecting device (12) for a second data bus (F2), which is not the same as the first, and
- a data processing device (13, 15), which is connected to the first and the second connecting device (11, 12) in order to allow data to be interchanged between the data buses (F1, F2),
**characterized by**
- a third connecting device (14), which is likewise connected to the data processing device (13, 15), for a third data bus (P), which is not the same as the first and second data buses, so that data can be interchanged between the three data buses (F1, F2, P).

2. Coupling apparatus according to Claim 1, which is configurable.

3. Coupling apparatus according to Claim 2, which can be configured in such a way that the data transfer between two or three of the data buses (F1, F2, P) can be controlled as a function of the semantics of the data to be transmitted.

4. Coupling apparatus according to one of the preceding claims, with the first data bus (F1) being a Profibus.

5. Coupling apparatus according to one of the preceding claims, with the second data bus (F2) being an AS-i bus.

6. Coupling apparatus according to one of the preceding claims, in which input/output modules (13, 03) can be connected to the third data bus (P) and can be linked to the first and/or the second data bus with the aid of the coupling apparatus (1).

7. Coupling apparatus according to one of the preceding claims, which has a monitor (16) with a configuration capability.

## Revendications

1. Dispositif de couplage pour des bus de données comprenant
- un premier dispositif ( 11 ) de connexion pour un premier bus ( F1) de données,
- un deuxième dispositif ( 12 ) de connexion pour un deuxième bus ( F2 ) de données différent du premier et
- un dispositif ( 13, 15 ) de traitement de données, qui est relié au premier et au deuxième dispositifs ( 11, 12 ) de connexion pour rendre possible un échange de données entre les bus ( F1, F2 ) de données,
**caractérisé par**
- un troisième dispositif ( 14 ) de connexion, qui est relié également au dispositif ( 13, 15 ) de traitement de données, pour un troisième bus ( P ) de données différent du premier et du deuxième de manière à rendre possible un échange de données entre les trois bus ( F1, F2, P ) de données.

2. Dispositif de couplage suivant la revendication 1, qui peut être configuré.

3. Dispositif de couplage suivant la revendication 2, qui peut être configuré de manière à ce que le transfert de données entre deux ou trois des bus ( F1, F2, P ) de données puisse être commandé en fonction de la sémantique des données à transmettre.

4. Dispositif de couplage suivant l'une des revendications précédentes, dans lequel le premier bus ( F1 ) de données est un profibus.

5. Dispositif de couplage suivant l'une des revendications précédentes, dans lequel le deuxième bus ( F2 ) de données est un AS-i-bus.

6. Dispositif de couplage suivant l'une des revendications précédentes, dans lequel au troisième bus ( P ) de données peuvent être raccordés des modules ( I3, O3 ) d'entrée/sortie qui peuvent être combinés au premier et/ou au deuxième bus de données à l'aide du dispositif ( 1 ) de couplage.

7. Dispositif de couplage suivant l'une des revendications précédentes, qui a un moniteur ( 16 ) ayant une possibilité de configuration.
